# EUROPÄISCHE PATENTSCHRIFT

(11) **EP 1 262 266 B1**
(45) Veröffentlichungstag und Bekanntmachung des Hinweises auf die Patenterteilung: **11.07.2007**
(21) Anmeldenummer: 02405258.1
(22) Anmeldetag: 03.04.2002
(51) Int. Cl.: B23H 7/26, B23H 9/00, B25B 23/10

(54) **Spannvorrichtung**
Gripping device
Dispositif de fixation

(30) Priorität: 27.04.2001 CH 7782001
(43) Veröffentlichungstag der Anmeldung: 04.12.2002
(73) Patentinhaber: Erowa AG, CH-5734 Reinach (CH)
(72) Erfinder: Fries, Karl, 5734 Reinach (CH)
(74) Vertreter: Rottmann, Maximilian

(56) Entgegenhaltungen:
- DE-C- 288 152
- US-A- 2 043 274
- US-A- 2 629 277
- US-A- 3 194 938
- US-A- 3 741 573
- US-A- 5 315 902

## Beschreibung

Die Erfindung betrifft eine gemäss dem Oberbegriff des Anspruchs 1 ausgebildete Spannvorrichtung.

Um Gewindeschäfte in Form von Elektroden zum Erodieren von Gewinden zu fixieren, werden bis anhin zumeist Spannvorrichtungen in Form von geschlitzten Spannzangen verwendet, die in einen entsprechenden Spannzangenhalter eingesetzt und darin festgespannt werden. Der zu fixierende Gewindeschaft wird in die zentrale Öffnung der Spannzange eingeführt und darin klemmend fixiert. Diese Art der Fixierung hat zwei grundlegende Nachteile. Zum einen kommt nur der eigentliche Kamm des Gewindes in der Spannzange zur Anlage, was insbesondere bei Spitzgewinden die Gefahr mit sich bringt, dass das Gewinde beschädigt wird. Zum anderen ist die Lage des Gewindes in Relation zur Spannzange bzw. zum Spannzangenhalter nicht definiert. Dies hat zur Folge, dass sich bei einem Nachstellen des Gewindeschafts, beispielsweise in Folge von Verschleiss, die Lage des Gewindes bzw. der Gewindegänge in Relation zum Spannzangenhalter verändert. Da beim Erodieren von Gewinden jedoch häufig zuerst mit einem Gewindeabschnitt mehrere Gewinde vorgeschruppt werden, bevor der Gewindeschaft nachgestellt wird, damit das vorgeschruppte Gewinde danach mit einem neuen Gewindeabschnitt des Gewindeschafts auf das eigentliche Nennmass auferodiert werden kann, besteht die Gefahr, dass die Gewindegänge des neuen Gewindeabschnitts nicht mit denjenigen beim Vorschruppen übereinstimmen, was bekanntlich dazu führt, dass keine sauberen Gewindeflanken entstehen und das fertige Gewinde nicht den gewünschten Qualitäts-Anforderungen entspricht. Es versteht sich, dass der "verbrauchte" Teil des Gewindeschafts abgetrennt wird, bevor ein neuer Gewindeabschnitt des Gewindeschafts zum Einsatz kommt.

Aus der US 2,629,277, welches Dokument den nächstliegenden Stand der Technik darstellt, ist eine Spannvorrichtung für Gewindebolzen bekannt. Diese weist einen Grundkörper auf, der mit einer axialen Grundbohrung und einer im Durchmesser grösseren, im wesentlichen koaxial dazu verlaufenden Gegenbohrung versehen ist, welch letztere sich in Umfangsrichtung über ca. 180° erstreckt. Im weiteren ist ein quer in den Grundkörper eingelassener Schlitz vorgesehen, welcher die Grund- und die Gegenbohrung kreuzt. Zur Fixierung des Gewindebolzens ist ein zweiteiliges Klemmset vorgesehen. Dieses Klemmset besteht aus einem stationären und einem beweglichen Klemmteil, wobei beide Klemmteile mit Gewindegängen zur Fixierung des Gewindebolzens versehen sind. Der stationäre Klemmteil ist in die Gegenbohrung eingesetzt während der bewegliche Klemmteil im Schlitz aufgenommen ist. Die beiden Klemmteile sind mittels einer Feder derart gegeneinander verspannt, dass ein im Klemmset aufgenommener Gewindebolzen klemmend darin fixiert wird.

Aus der DE 288 152 ist ein Werkzeug zum Ein- und Ausschrauben von Gewindebolzen bekannt. Dieses Werkzeug besteht aus einem äusseren Gehäuse, das auf der Innenseite mit mehreren exzentrischen Kurvenflächen versehen ist. In diesen exzentrischen Kurvenflächen sind Backen aufgenommen, welche mit nach innen vorstehenden Nasen versehen sind. Die Nasen sind mit Gewindegängen zur Fixierung von Gewindebolzen versehen. Die Backen werden mittels federnden Armen in ihrer Position gehalten. Um einen Gewindebolzen im Werkzeug zu fixieren, wird das äussere Gehäuse relativ zu den Backen verdreht. Dabei werden die Backen durch die exzentrischen Kurvenflächen radial nach innen verschoben, so dass die Gewindegänge der Backen in das entsprechende Gewinde des Gewindebolzens eingreifen und diesen fixieren.

Schliesslich ist aus der US 2,043,274 eine Spannvorrichtung für Gewindebolzen bekannt, die aus einem sechseckigen Gehäuse besteht, das auf der Innenseite mit einer zentralen Öffnung versehen ist, die von vier nockenförmigen Flächen begrenzt wird. In diese zentrale Öffnung ist eine mit vier Schlitzen versehene Muffe eingesetzt, die mit einem Innengewinde zum Fixieren eines Gewindebolzens versehen ist. Die Muffe wird durch die genannten Schlitze in vier Sektionen unterteilt, welche bei einem Verdrehen der Muffe gegenüber den Gehäuse durch die nockenförmigen Flächen radial nach innen gedrückt werden, um einen in der Spannvorrichtung aufgenommenen Gewindebolzen zu fixieren.

Ein grundsätzlicher Nachteil der beschriebenen Spannvorrichtungen besteht darin, dass die Lage eines darin eingespannten Gewindebolzens nicht näher definiert bzw. definierbar ist. Dies rührt daher, dass bei Spannvorrichtungen, die mit verdrehbaren Spannbacken oder Klemmelementen versehen sind, die Lage des Gewindebolzens in der Spannvorrichtung u.a. davon abhängt, mit welcher Kraft die Spannbacken festgezogen wurden und in welcher Endlage sich diese nach dem Festziehen befinden.

Zum anderen sind bei den genannten Spannvorrichtungen keine Vorkehrungen getroffen, damit die Spannvorrichtung positionsgenau, d.h. in axialer Richtung wie auch in Bezug auf die Winkellage um die Längsmittelachse, derart ausgerichtet werden kann, dass deren Lage, und damit auch die Lage des darin eingespannten Gewindebolzens, präzise definiert ist.

Die Aufgabe der Erfindung besteht nun darin, die im Oberbegriff des Anspruchs 1 definierte Spannvorrichtung derart weiterzubilden, dass die vorerwähnten Nachteile vermieden werden, indem ein Gewindebolzen mit hoher und reproduzierbarer Genauigkeit schnell und einfach darin festspannbar ist.

Diese Aufgabe wird durch die im Kennzeichen des Anspruchs 1 angeführten Merkmale gelöst.

Indem das Klemmelement verdrehsicher in einer Ausnehmung aufgenommen ist, kann sichergestellt werden, dass sich die Lage des Klemmelements in Bezug auf die Spannvorrichtung nicht verändert und ein Gewindebolzen wiederholt mit hoher Genauigkeit festgespannt werden kann. Durch die radiale Verschiebbarkeit des Klemmelemenst wird zudem sichergestellt, dass der Gewindebolzen einfach und schnell festspannbar ist.

Bevorzugte Weiterbildungen der Spannvorrichtung sind in den abhängigen Ansprüchen 2 bis 11 definiert.

So ist bei einem bevorzugten Ausführunsgbeispiel vorgesehen, die Spannvorrichtung mit einer Referenzfläche zu versehen, welche ein genaues Ausrichten der gesamten Spannvorrichtung, und damit auch des darin eingespannten Gewindebolzens, beispielsweise in Bezug auf eine Werkzeugmaschine, ermöglicht.

Ein Ausführungsbeispiel der Erfindung wird nachfolgend anhand von Zeichnungen näher erläutert. In diesen Zeichnungen zeigt:
Fig. 1 einen Längsschnitt durch die Spannvorrichtung;
Fig. 2 die wesentlichen Einzelteile der Spannvorrichtung in perspektivischer Ansicht;
Fig. 3 eine perspektivische Ansicht des Klemmelements, und
Fig. 4 einen Querschnitt durch die Spannvorrichtung entlang der Linie A-A in Fig. 1.

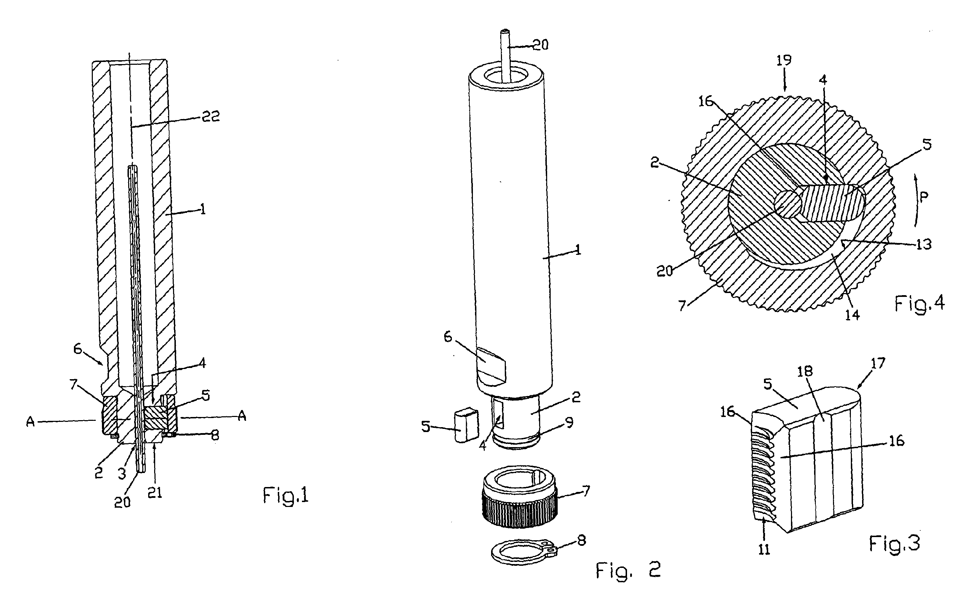

Die Spannvorrichtung gemäss Fig. 1 weist einen hohlzylindrischen Schaft 1 auf, dessen Vorderteil durch eine zylindrische Spannhülse 2 gebildet wird. Die Spannhülse 2 ist mit einer zentralen Bohrung 3 zur Aufnahme eines Gewindeschafts 20 versehen, wobei der Durchmesser dieser Bohrung 3 auf den Aussendurchmesser des darin aufzunehmenden Gewindeschafts 20 abgestimmt ist. Die Spannhülse 2 ist mit einer in die zylindrische Bohrung 3 mündenden Ausnehmung 4 versehen, in welcher ein Klemmelement 5 radial verschiebbar aufgenommen ist. Radial verschiebbar heisst im vorliegenden Fall, das Klemmelement 5 ist in Richtung des Gewindeschafts 20 verschiebbar. Die Höhe und Breite der Ausnehmung 4 ist so gewählt, dass das Klemmelement 5 zumindest annähernd spielfrei darin gehalten ist. Dadurch ist es verdrehsicher gehalten und die horizontale wie auch vertikale Position ist bestimmt. Die Funktionsweise und Ausbildung dieses Klemmelements 5 wird nachfolgend anhand der Figur 3 noch näher erläutert. Auf der Aussenseite der Spannhülse 2 ist ein drehbares Betätigungselement 7 angeordnet, das dem Verschieben des Klemmelements 5 in radialer Richtung dient. Am unteren Ende der Spannhülse 2 ist eine Nut 9 eingelassen, in der ein Sicherungsring 8 fixiert ist, der dem axialen Fixieren des Betätigungselements 7 dient. Der hohlzylindrischen Schaft 1 ist auf der Aussenseite mit einer Referenzfläche 6 versehen, welche eine eindeutige Positionierung der Spannvorrichtung erlaubt. Diese Referenzfläche 6 ist so ausgebildet und angeordnet, dass sie eine eindeutige Bestimmung der Lage der Spannvorrichtung sowohl in vertikaler Richtung, beispielsweise in Bezug auf die Stirnfläche 21, wie auch in Bezug auf die Winkellage um die Längsmittelachse 22 ermöglicht. Dadurch kann die gesamte Spannvorrichtung, und damit auch der darin eingespannte Gewindeschaft 20, präzise ausgerichtet werden.

Fig. 2 zeigt die wesentlichen Einzelteile der Spannvorrichtung, namentlich den hohlzylindrischen Schaft 1, die Spannhülse 2 mit der Ausnehmung 4, das Klemmelement 5, das drehbare Betätigungselement 7 sowie den Sicherungsring 8 in perspektivischer Ansicht. Ausserdem ist die in die Spannhülse 2 eingelassene Nut 9 zur Aufnahme des Sicherungsrings 8 ersichtlich. Der zu fixierende Gewindeschaft 20 ist schematisch dargestellt.

Aus der Fig. 3 ist das Klemmelement 5 in einer perspektivischen Ansicht ersichtlich. In den Vorderteil des Klemmelements 5 sind Gewindegänge 11 eingelassen, die auf das Gewinde des zu fixierenden Gewindeschafts 20 (Fig. 2) abgestimmt sind. Die Rückseite des Klemmelements 5 ist abgerundet. Das Klemmelement 5 ist auf seiner dem Gewindeschaft 20 zuzuwendenden Vorderseite mit abgeschrägten Seitenflächen 16 versehen. Auf der einen Seite ist das Klemmelement 5 mit einer als Markierung dienenden Nut 18 versehen, welche als Positionierhilfe dient, so dass das Klemmelement 5 immer gleich in die Ausnehmung 4 (Fig. 2) eingesetzt wird.

Anhand der Fig. 4, welche vergrössert einen Querschnitt durch die Spannvorrichtung entlang der Linie A-A in Fig. 1 zeigt, wird die Funktionsweise und Ausbildung der Spannvorrichtung erläutert. Aus dieser Darstellung sind die Spannhülse 2 mit der darin eingelassenen Ausnehmung 4, das Klemmelement 5, das drehbare Betätigungselement 7 sowie der zu fixierende Gewindeschaft 20 ersichtlich. Das Klemmelement 5 ist im vorliegenden Beispiel in der Ruhestellung gezeigt, in welcher dessen Gewindegänge 11 (Fig. 3) nicht in das Gewinde des Gewindeschafts 20 eingreifen, so dass letzterer in axialer Richtung nicht fixiert ist. Zum Fixieren des Gewindeschafts 20 wird das Betätigungselement 7 in Pfeilrichtung P verdreht. Durch die ellipsenförmige Gestaltung der Ausnehmung 14 wird das Klemmelement 5 radial nach innen verschoben, so dass die Gewindegänge des Klemmelements 5 in das Gewinde des Gewindeschafts 20 eingreifen und letzteren bzw. dessen Gewindeflanken in einer gegenüber der Spannvorrichtung definierten Position fixieren. Zum Lösen des Gewindeschafts 20 wird das Betätigungselement 7 in die andere Richtung verdreht. Dadurch liegt die Rückseite des Klemmelements 5 nicht mehr an der Wandung 13 der ellipsenförmige Ausnehmung 14 des Betätigungselements 7 an und kann radial nach aussen verschoben werden. Nach dem Lösen des Betätigungselements 7 kann der Gewindeschaft 20 durch Drehen in axialer Richtung verschoben werden. Sofern sich das Betätigungselement 7 in der in Fig. 4 dargestellten Ruhestellung befindet, kann der Gewindeschaft 20 auch durch Ziehen nach unten verschoben werden, da das Klemmelement 5 nicht selbsthemmend ist und durch ein Ziehen am Gewindeschaft 20 dessen Gewindeflanken das Klemmelement 5 radial nach aussen drücken. Beim Festziehen des Betätigungselements 7 wird das Klemmelement 5 wieder radial nach innen verschoben, so dass dessen Gewindegänge in das Gewinde des Gewindeschafts 20 eingreifen und letzteren wiederum in einer gegenüber der Spannvorrichtung definierten Position fixieren. Das Betätigungselement 7 ist auf der Aussenseite mit einer mechanischen Struktur in Form einer Rändelung 19 versehen. Wie aus dieser Darstellung zudem ersichtlich ist, verjüngt sich die in die zylindrische Bohrung mündende Ausnehmung 4 auf der dem Gewindeschaft 20 zugewandten Vorderseite. Diese Verjüngung bildet einen Anschlag, an dem sich das mit korrespondierenden Seitenflächen 16 versehene Klemmelement 5 anlegen kann und ein zu tiefes Eindringen der Gewindegänge des Klemmelements 5 in die Gewindegänge des Gewindeschafts 20 verhindert.

Das gezeigte Ausführungsbeispiel der Spannvorrichtung eignet sich insbesondere zum Fixieren von kleinen Gewindeschäften bzw. von Gewindeschäften in Form von Elektroden, wie sie zum Erodieren von Gewinden, beispielsweise von M3- bis M10-Gewinden, verwendet werden. Diesbezüglich sei erwähnt, dass ein Gewindeschaft zum Erodieren eines M3-Gewindes einen Aussendurchmesser von gerade einmal 1.7mm bei einer Steigung von 0.5mm aufweist. Es versteht sich, dass es sehr schwierig ist, ein derart kleines Gewinde auf herkömmliche Weise durch Gewindeschneiden herzustellen. Deshalb bietet sich die Variante mit dem gezeigten Klemmelement 5 insbesondere für Gewindeschäfte mit kleinem Aussendurchmesser an, da es vergleichsweise einfach ist, die Stirnseite des Klemmelements 5 mit entsprechenden Gewindegängen 11 zu versehen. Bei grösseren Gewindeschäften kann es sich durchaus anbieten, eine in herkömmlicher Weise ausgebildete -geschlitzte- Spannzange zum Fixieren eines Gewindeschafts vorzusehen, wobei die Spannzange vorzugsweise direkt mit einem Innengewinde versehen ist.

Um das Klemmelement 5 bei gelöstem Betätigungselement 7 in der in Fig. 4 gezeigten Ruhestellung zu halten, kann eine Feder (nicht dargestellt) vorgesehen werden, welche das Klemmelement 5 in der Ruhestellung zu halten bestrebt ist.

## Patentansprüche

1. Spannvorrichtung zur Aufnahme und zum drehfesten Fixieren von Gewindeschäften (20), insbesondere von Gewindeschäften (20) in Form von Elektroden zum Erodieren von Gewinden, mit zumindest einem bewegbaren und festsetzbaren Klemmelement (5) zum Fixieren eines Gewindeschafts (20), wobei die dem Gewindeschaft (20) zuzuwendende Stirnseite des Klemmelements zumindest teilweise mit Gewindegängen (11) versehen ist, **dadurch gekennzeichnet, dass** das Klemmelement (5) verdrehsicher in einer radialen Ausnehmung (4) aufgenommen und rein radial verschiebbar ist, so dass sich während des Fixierens die Radiallage des Klemmelementes in Bezug auf die Spannvorrichtung nicht verändert.

2. Spannvorrichtung nach Anspruch 1, **dadurch gekennzeichnet, dass** die Spannvorrichtung mit zumindest einer Referenzfläche (6) zum Ausrichten der Spannvorrichtung versehen ist.

3. Spannvorrichtung nach Anspruch 1 oder 2, **dadurch gekennzeichnet, dass** die Spannvorrichtung eine mit einer zylindrischen Bohrung (3) versehene Spannhülse (2) aufweist, deren Bohrungsdurchmesser auf den Aussendurchmesser des Gewindeschafts (20) abgestimmt ist, und dass die Ausnehmung (4) zur Aufnahme des Klemmelements (5) radial in die zylindrische Bohrung (3) mündet.

4. Spannvorrichtung nach einem der vorhergehenden Ansprüche, **dadurch gekennzeichnet, dass** das Klemmelement (5) zumindest annähernd spielfrei in der Ausnehmung (4) aufgenommen ist.

5. Spannvorrichtung nach Anspruch 3 oder 4, **dadurch gekennzeichnet, dass** sich die in die zylindrische Bohrung (3) mündende Ausnehmung (4) zu der zylindrischen Bohrung hin zu einem Anschlag verjüngt, an welchem das Klemmelement (5) auf seiner dem Gewindeschaft (20) zuzuwendenden Vorderseite mit entsprechend korrespondierenden Seitenflächen (16) anzuliegen bestimmt ist.

6. Spannvorrichtung nach einem der vorhergehenden Ansprüche, **dadurch gekennzeichnet, dass** das Klemmelement (5) mittels einer Feder belastet ist, welche das Klemmelement (5) in der Ruhestellung zu halten bestrebt ist, in der die Gewindegänge (11) des Klemmelements (5) nicht im Eingriff mit den Gewindegängen eines in der Spannhülse (2) aufgenommenen Gewindeschafts (20) stehen.

7. Spannvorrichtung nach einem der Ansprüche 3 bis 6, **dadurch gekennzeichnet, dass** auf der Aussenseite der Spannhülse (2) ein drehbares Betätigungselement (7) angeordnet ist, welch letzteres auf der Innenseite mit einer dem Klemmelement (5) zugewandten, ellipsenförmigen Ausnehmung (14) versehen ist, deren Wandung (13) beim Verdrehen des Betätigungselements (7) das Klemmelement (5) radial zu verschieben bestimmt ist.

8. Spannvorrichtung nach Anspruch 7, **dadurch gekennzeichnet, dass** das Betätigungselement (7) manuell verdrehbar ist und auf seiner Aussenseite mit einer mechanischen Struktur (19) versehen ist.

9. Spannvorrichtung nach Anspruch 7 oder 8, **dadurch gekennzeichnet, dass** das Klemmelement (5) auf seiner in die ellipsenförmige Ausnehmung (14) des Betätigungselements (7) ragenden Rückseite (17) abgerundet ausgebildet ist.

10. Spannvorrichtung nach einem der Ansprüche 7 bis 9, **dadurch gekennzeichnet, dass** auf der Unterseite des drehbaren Betätigungselements (7) ein Sicherungsring (8) angeordnet ist.

11. Spannvorrichtung nach einem der vorhergehenden Ansprüche, **dadurch gekennzeichnet, dass** das Klemmelement (5) mit einer als Positionierhilfe dienenden Markierung (18) versehen ist.

## Claims

1. Gripping device for the accommodation and rotationally locked fixing of threaded stems (20), in particular of threaded stems (20) in the form of electrodes for the electrical discharge machining of threads, having at least one movable and fixable clamping element (5) for fixing a threaded stem (20), that end face of the clamping element which is to be turned towards the threaded stem (20) being at least partly provided with thread turns (11), **characterized in that** the clamping element (5) is accommodated in a rotationally locked manner in a radial aperture (4) and is exclusively radially displaceable, such that the radial position of the clamping element with respect to the gripping device does not change during the fixing.

2. Gripping device according to Claim 1, **characterized in that** the gripping device is provided with at least one reference surface (6) for orienting the gripping device.

3. Gripping device according to Claim 1 or 2, **characterized in that** the gripping device has a gripping sleeve (2) which is provided with a cylindrical bore (3), the bore diameter of which is matched to the outside diameter of the threaded stem (20), and **in that** the aperture (4) for accommodating the clamping element (5) opens radially into the cylindrical bore (3).

4. Gripping device according to one of the preceding claims, **characterized in that** the clamping element (5) is accommodated in the aperture (4) at least approximately free of play.

5. Gripping device according to Claim 3 or 4, **characterized in that** the aperture (4) opening into the cylindrical bore (3) narrows towards the cylindrical bore to a stop, against which the clamping element (5) is intended to bear with appropriately corresponding side faces (16) on its front side to be turned towards the threaded stem (20).

6. Gripping device according to one of the preceding claims, **characterized in that** the clamping element (5) is loaded by means of a spring which attempts to hold the clamping element (5) in the rest position, in which the thread turns (11) of the clamping element (5) are not in engagement with the thread turns of a threaded stem (20) accommodated in the gripping sleeve (2).

7. Gripping device according to one of Claims 3 to 6, **characterized in that** a rotatable actuating element (7) is arranged on the outer side of the gripping sleeve (2), which actuating element (7) is provided on the inner side with an elliptical recess (14) which faces the clamping element (5) and whose wall (13) is intended to radially displace the clamping element (5) when the actuating element (7) is rotated.

8. Gripping device according to Claim 7, **characterized in that** the actuating element (7) can be rotated manually and is provided with a mechanical structure (19) on its outer side.

9. Gripping device according to Claim 7 or 8, **characterized in that** the clamping element (5) is of rounded design on its rear side (17) projecting into the elliptical recess (14) of the actuating element (7).

10. Gripping device according to one of Claims 7 to 9, **characterized in that** a circlip (8) is arranged on the underside of the rotatable actuating element (7).

11. Gripping device according to one of the preceding claims, **characterized in that** the clamping element (5) is provided with a marking (18) serving as positioning aid.

## Revendications

1. Dispositif de serrage destiné à recevoir et à fixer des tiges filetées (20) de manière résistante à la torsion, en particulier des tiges filetées (20) en forme d'électrodes servant à éroder des filets avec au moins un élément de serrage (5) mobile pouvant être bloqué pour fixer une tige filetée (20), la face frontale à tourner vers la tige filetée (20) de l'élément de serrage (5) étant au moins partiellement pourvue de spires (11), **caractérisé en ce que** l'élément de serrage (5) est reçu de manière résistante à la torsion dans un creux radial (4) et qu'il est déplaçable exclusivement radialement, de manière que la position radiale de l'élément de serrage par rapport au dispositif de serrage ne se modifie pas pendant la fixation.

2. Dispositif de serrage suivant la revendication 1, **caractérisé en ce que** le dispositif de serrage est pourvu d'une surface de référence (6) au moins permettant d'aligner le dispositif de serrage.

3. Dispositif de serrage suivant la revendication 1 ou 2, **caractérisé en ce que** le dispositif de serrage présente une douille de serrage (2) pourvue d'une forure cylindrique (3), dont le diamètre de perçage est adapté au diamètre extérieur de la tige filetée (20) et **en ce que** le creux (4) servant à recevoir l'élément de serrage (5) débouche radialement dans la forure cylindrique (3).

4. Dispositif de serrage suivant une des revendications précédentes, **caractérisé en ce que** l'élément de serrage (5) est reçu dans le creux (4) au moins approximativement sans jeu.

5. Dispositif de serrage suivant la revendication 3 ou 4, **caractérisé en ce que** le creux (4) débouchant dans la forure cylindrique (3) diminue en direction de celle-ci, en formant une butée, contre laquelle l'élément de serrage (5) adhère avec des faces latérales (16) correspondantes au niveau de sa face frontale à tourner vers la tige filetée (20).

6. Dispositif de serrage suivant une des revendications précédentes, **caractérisé en ce que** l'élément de serrage (5) est chargé au moyen d'un ressort, qui tend à maintenir l'élément de serrage (5) en position de repos, dans laquelle les spires (11) de l'élément de serrage (5) ne sont pas en prises avec les spires d'une tige filetée (20) reçue dans la douille de serrage (2).

7. Dispositif de serrage suivant une des revendications 3 à 6, **caractérisé en ce que** la face intérieure d'un élément d'actionnement (7), disposé sur la face extérieure de la douille de serrage (2), est pourvue d'un creux elliptique (14), tourné vers l'élément de serrage (5), creux (14), dont la paroi (13) sert à déplacer l'élément de serrage (5) radialement, lorsque l'élément d'actionnement (7) est tourné.

8. Dispositif de serrage suivant la revendication 7, **caractérisé en ce que** l'élément d'actionnement (7) peut être tourné manuellement et qu'il est pourvu d'une structure mécanique (19) sur sa face extérieure.

9. Dispositif de serrage suivant la revendication 7 ou 8, **caractérisé en ce que** la face arrière (17) de l'élément de serrage (5), face arrière, qui s'avance dans le creux elliptique (14) de l'élément d'actionnement (7), est conçue arrondie.

10. Dispositif de serrage suivant une des revendications 7 à 9, **caractérisé en ce qu'**une bague de sécurité (8) est disposée sur la face inférieure de l'élément d'actionnement (7) pouvant être tourné.

11. Dispositif de serrage suivant une des revendications précédentes, **caractérisé en ce que** l'élément de serrage (5) est pourvu d'un marquage servant d'aide au positionnement.
